# EUROPEAN PATENT APPLICATION

(11) **EP 1 717 655 A1**
(43) Date of publication of application: **02.11.2006**
(21) Application number: 06007403.6
(22) Date of filing: 07.04.2006
(51) Int. Cl.: G05B 19/406, B29C 45/17

(54) **Display controller for injection molding machine**

(30) Priority: 18.04.2005 JP 2005120056
(71) Applicant: FANUC LTD, Minamitsuru-gun, Yamanashi 401-0597 (JP)
(72) Inventor: Araki, Kenji, Oshino Minamitsuru Yamanashi 401-0511 (JP); Saito, Osamu, Oshino Minamitsuru Yamanashi 401-0511 (JP)
(74) Representative: Thum, Bernhard

(57) **Abstract**

A display controller for an injection molding machine which can display a large amount of information or display characters, etc. in a manner that they are easy to read, according to need, to provide good operability. The apparatus has main frames MD for setting molding conditions and displaying actual measurement values, and subsidiary frames SD for displaying data representing the conditions of the injection molding machine. A first display mode for displaying only one main frame MD selected, a second display mode for displaying a selected main frame MD in a reduced size with one or more subsidiary frames SD1, SD2 selected, and a third display mode for displaying a plurality of main frames MD selected are provided, where a switchover between the first, second and third display modes can be carried out. In the first display mode, characters, etc. are displayed in a large size, so that data displayed can be clearly read. In the third display mode, a large amount of information is displayed and hence can be monitored on the screen at a time.
In the second display mode, the size of characters is medium and the amount of information is medium. An optimal display mode is selected according to need.

## Description

### BACKGROUND OF THE INVENTION

### 1. Field of the Invention

The present invention relates to a display controller for displaying molding condition setting data and monitoring data, provided for an injection molding machine.

### 2. Description of Related Art

The precision of products molded by the injection molding machine has been becoming higher and higher. To respond to higher precision of molded products, the number of setting items set for the injection molding machine and the number of monitoring items monitored during molding have been increasing. Meanwhile, in the injection molding machine, setting and monitoring is carried out on a screen of a display device, and the size that the screen can have is limited.

Thus, in order to respond to increase in the number of setting items and monitoring items, it is necessary to take measures such as increasing the number of frames on a display screen, reducing the size of characters, or narrowing the space between characters. However, if the number of frames is increased, the number of times that a key or touch panel is operated to reach an intended frame increases. Thus, the handling becomes troublesome, and hence the operability lowers. Meanwhile, reducing the size of characters or narrowing the space between characters makes the characters harder to read, which also lowers the operability.

In order to improve the lowering of operability due to increase in the number of frames, there has been proposed a display switchover method in an injection molding machine, where a frame displayed on a display device of a controller of the injection molding machine includes information about other relevant frames to allow an immediate switchover to a relevant frame according to machine situation (see JP 11-254497A).

There has been also proposed a display device of an injection molding machine, which has a control function switchover capable of operating a control function of the injection molding machine, a main-frame display region for displaying information about molding condition setting devices and monitoring data, and a sub-frame display region for displaying desired types of data such as monitoring data at a desired time, independently of the main display region, where it is arranged such that, even when a subsidiary frame is displayed, a main frame displayed is not concealed by the subsidiary frame, and that a main frame and a subsidiary frame displayed together can be selected (see JP 2001-145947A).

There have also been proposed a display section having a frame divided into equal cells, where a group of setting data selected from prepared groups of molding condition setting data can be displayed in a cell and entered (see JP 2002-18922A), and an operation frame display device of a molding machine having a main frame display and a subsidiary frame display, where a switchover to the subsidiary frame display can be carried out easily and with certainty (see JP 2003-181875A).

In order to improve difficulty in reading characters, there have been proposed a device in which part of a frame can be enlarged to the size which allows information to be read easily (see JP 5-8275A), and a display control method in a molding machine, in which a frame can be scrolled and the amount of scrolling can be adjusted such that the relation between a display before scrolling and a display after scrolling is easy to see (see JP 5-8273A).

In the techniques disclosed in JP 11-254497A, JP 2001-145947A, JP 2002-18922A and JP 2003-181875A mentioned above, various kinds of information can be displayed on the screen of the display device at a time and a switchover between different displays can be carried out easily. However, in order to increase the amount of information displayed on the screen at a time, measures such as reducing the size of characters need to be taken. In the techniques disclosed in JP 5-8275A and JP 5-8273A, a large amount of information can be displayed on the screen. However, as the amount of information to be displayed increases, the number of times that the frame is enlarged or scrolled increases, and hence the operability lowers.

### SUMMARY OF THE INVENTION

The present invention provides a display controller for an injection molding machine which can display a large amount of information or display characters etc. in a manner that they are easy to read, according to need, to provide good operability.

A display controller for an injection molding machine of the present invention comprises: displaying means for displaying one or more main frames regarding molding conditions of the injection molding machine and one or more subsidiary frames to be associated with the main frame on the display device, in one of a first display mode where only one main frame is displayed, a second display mode where only one main frame and at least one subsidiary frames are displayed, and a third display mode where two or more main frames are displayed; and switchover means for performing a switchover among the first, second and third display modes in response to a manually inputted signal.

The display controller may further comprises means for switching over the main frame displayed on the display device to another main frame, and means for switching over the subsidiary frame displayed on the display device to another subsidiary frame.

Two or more subsidiary frames may be displayed on the display device in the second display mode.

A supplementary frame may be always displayed in an area other than areas where the main frames and the subsidiary frames are displayed on the display device.

A controller of the injection molding machine may serve as the display controller. In this case, the display controller may control the display on a display device provided at the controller of the injection molding machine.

The display controller may constitute an external display unit with a display device and an interface, and the external display unit may be connected to a controller of the injection molding machine through the interface and control the display on the display device.

The display controller may constitute an external display unit with a display device and an interface, and the external display unit may be connected to controllers of a plurality of injection molding machines through the interface, and control the display for any of the plurality of injection molding machines on the display device.

By selecting the display mode, main frame and subsidiary frame, it is possible to display characters, numerical values and graphs in a larger size to allow the information to be clearly read while the amount of information displayed at a time is reduced, or increase the amount of information displayed to enable relevant information to be monitored on the same screen at a time while the size of the characters and the like is reduced, or display and monitor a main frame and a subsidiary frame associated with the main frame at a time while the size of the characters and the like displayed is medium and the amount of information displayed is medium. Thus, according to need, an optimum display mode can be selected to provide good operability.

### BRIEF DESCRIPTION OF THE DRAWINGS

FIG. 1 is a schematic block diagram showing a first embodiment of the present invention,
FIG. 2 is part of a flow chart showing a screen display algorithm performed in the first embodiment,
FIG. 3 is a subsequent part of the flow chart,
FIG. 4 is a subsequent part of the flow chart,
FIG. 5 is an example of a screen display in a first display mode in the first embodiment,
FIG. 6 is an example of a screen display in a second display mode in the first embodiment,
FIG. 7 is an example of a screen display in a third display mode in the first embodiment,
FIG. 8 is a schematic block diagram showing a second embodiment of the present invention,
FIG. 9 is a schematic block diagram showing a third embodiment of the present invention, and
FIG. 10 is a schematic block diagram showing a fourth embodiment of the present invention.

### DETAILED DESCRIPTION

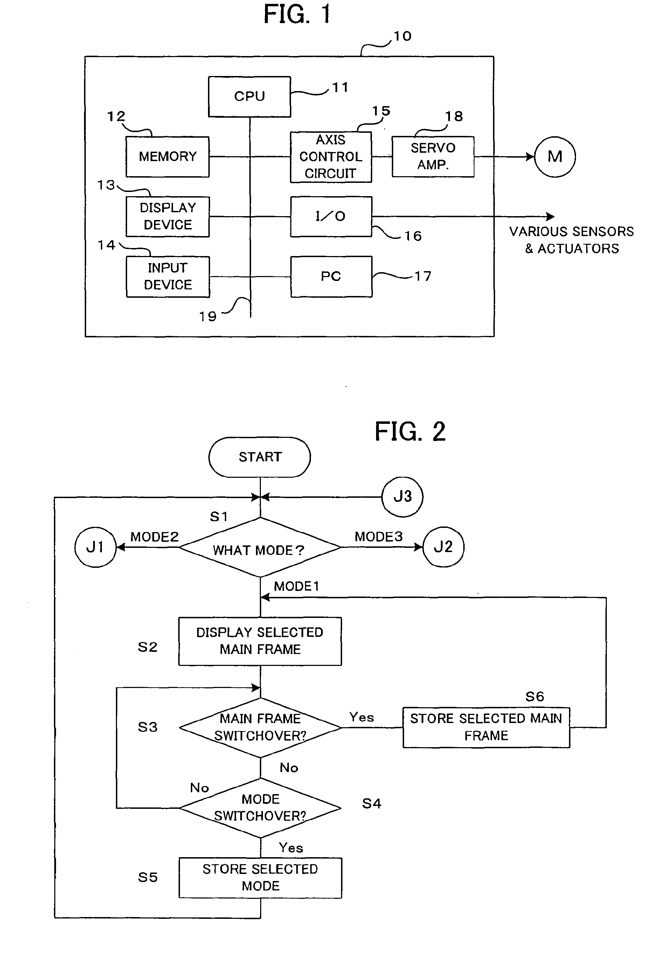

FIG. 1 is a schematic block diagram showing a display controller in a first embodiment of the present invention. In this embodiment, a numerical control device for controlling an injection molding machine constitutes a display controller.

The structure of this numerical control device functioning as a control device for controlling the injecting molding machine and also as a display controller in the first embodiment of the present invention is similar to the structure of conventional numerical control devices for controlling the injection molding machine, and hence shown only schematically. The present control device, however, differs from the conventional control devices in that a display control software for display mode switchover, main frame switchover and subsidiary frame switchover is stored in memory so that a processor of the control device executes this software.

In FIG. 1, in the control device 10 which constitutes a display controller, memory 12 including ROM, RAM, nonvolatile RAM, etc., a display device 13, an input device 14 such as a keyboard and a mouse, axis control circuits 15 for controlling servomotors for driving respective axes of a mold clamping mechanism, an injection screw, etc. of the injection molding machine (in FIG. 1, only one axis control circuit and one servomotor for one axis is shown), an input/output circuit 16, and a PC (programmable controller) 17 for sequence-controlling the injection molding machine are connected to a processor 11 by means of a bus 19. To the axis control circuits 15, servomotors M are connected via servo amplifiers 18, respectively. Further, various sensors and actuators provided in the injection molding machine are connected to the input/output circuit 16.

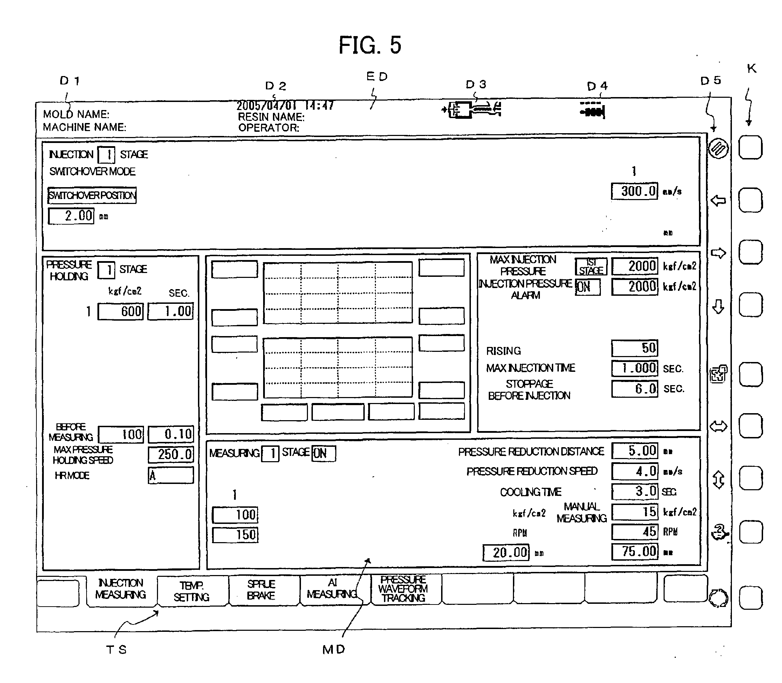

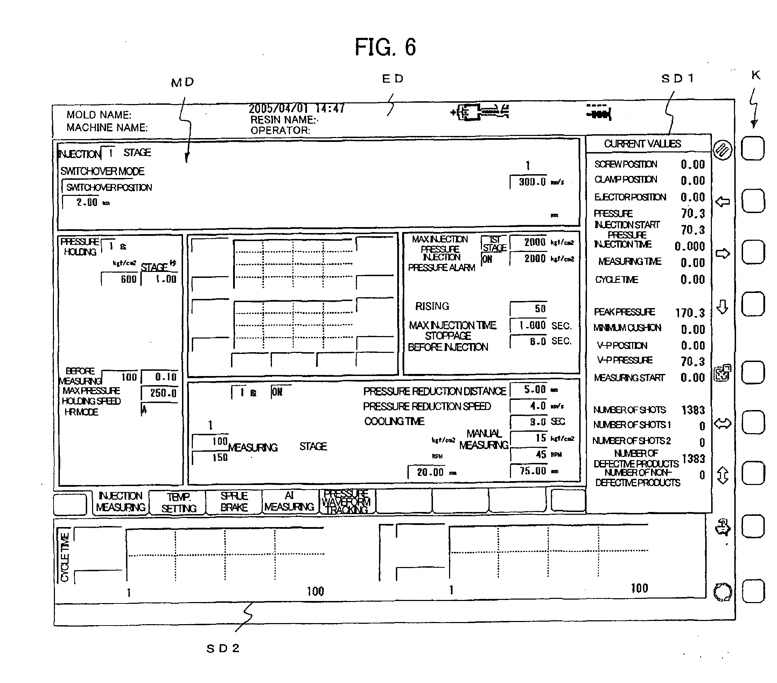

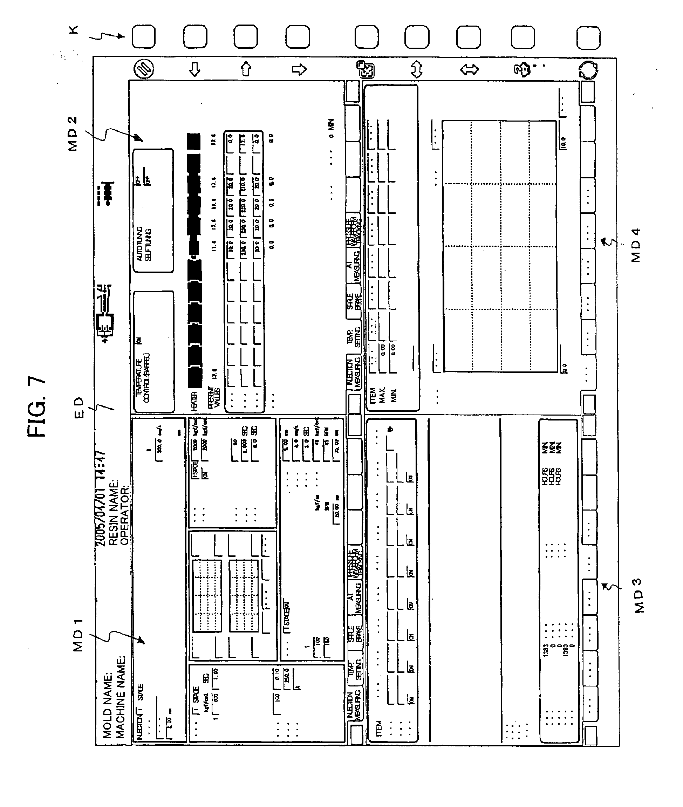

The processor 11 controls operations of the injection molding machine such as measuring, mold clamping, injection and pressure holding, according to system programs stored in the memory, and also controls the display device 13 in displaying molding condition setting frames and various frames showing the conditions of the injection molding machine. The present invention is distinctive in this display control. In the present embodiment, a first display mode in which the size of characters displayed on the frame is given priority (see FIG. 5), a third display mode in which the amount of information displayed on the frame is given priority (see FIG. 7), and a second display mode in which the size of characters displayed on the frame is medium and the amount of information displayed on the frame is medium (see FIG. 6). In the first display mode, a main frame MD is displayed over the whole region of the screen of the display device as shown in FIG. 5, for example. In the third display mode, the screen of the display device is divided into a plurality of regions (four regions in the present embodiment), and in each region, a main frame MD as displayed in the first display mode is displayed in a reduced size, so that a plurality of main frames (four main frames) MD in a reduced size are displayed on the screen at a time as shown in FIG. 7. For the second display mode, a plurality of subsidiary frames are prepared. In the present embodiment, in the second display mode, the screen of the display device is divided into a region for displaying a main frame MD and two regions for displaying two subsidiary frames SD1 and SD2, and one main frame MD and two subsidiary frames SD are displayed on the screen at a time.

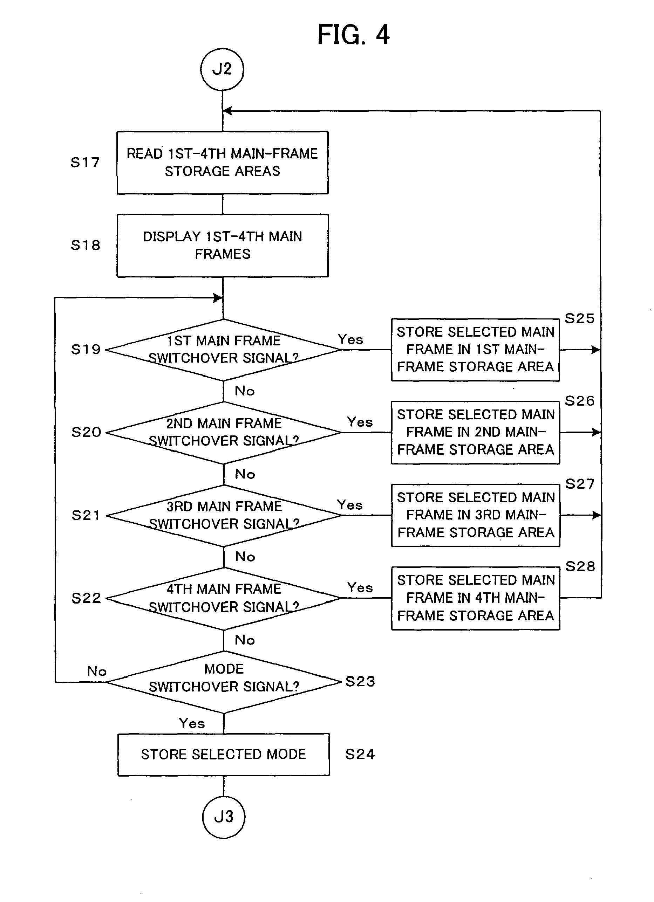

FIGS. 2 to 4 show a flow chart showing a display algorithm in the present embodiment.

In the present embodiment, there are provided, in the memory, a mode storage area for storing a number, code or the like indicating a display mode, a first main-frame storage area for storing a number, code or the like indicating a main frame displayed in the first or second display mode or a main frame displayed in a first region in the third display mode, first and second sub-frame storage areas for each storing a number, code or the like indicating a first or second subsidiary frame, and second to fourth main-frame storage areas for each storing a number, code or the like indicating a corresponding one of main frames displayed in second to fourth regions in the third display mode.

When power is put on, the processor 11 performs the process shown in FIGS. 2 to 4 at specified intervals. First, the processor reads the mode stored in the mode storage area (Step S1). If the first display mode is stored in the mode storage area, the main frame stored in the first main-frame storage area is displayed over the almost whole region of the screen of the display device 13, as shown in FIG. 5.

FIG. 5 is an example of a display in the first display mode. To the right, outside the screen, a plurality of function keys K used for a switchover between display modes and a switchover between subsidiary frames are arranged vertically. A switchover between the first, second and third display modes is carried out using these function keys K. It can be arranged such that a switchover between the display modes can be carried out using a touch switch dedicated to this purpose provided within the screen display.

The display in the first display mode shown in FIG. 5 comprises a main frame MD including, as display items, setting items and monitoring items such as actual measurement values (the display items depend on the main frame selected), and a supplementary frame ED for displaying items which are always displayed, remaining unchanged in the later-described second and third display modes.

The main frame MD is intended to deal with molding conditions. In the main frame MD, setting items and monitoring items such as actual measurement values are displayed, and when necessary, setting items can be set. The supplementary frame ED comprises an upper region and a rightmost region. In the example shown in FIG. 5, mold name and machine name indicated by D1, resin name and operator name indicated by D2, a figure representing the operation of the injection molding machine indicated by D3, a figure representing the heating of a cylinder indicated by D4, marks representing the respective functions of the function keys K indicated by D5, etc. are always displayed in any screen display in any display mode.

The example of the main frame MD shown in FIG. 5 is an injection/measuring frame for setting injection conditions and measuring conditions.

The main frames MD are frames for displaying setting data and actual measurement values, etc. indicating the conditions of molding operation of the injection molding machine monitored. In addition to the above-mentioned injection/measuring frame, the group of main frames MD includes various types of setting frames and of actual measurement value displaying frames, such as a mold-operation·ejection frame for setting conditions for mold opening and closing and for ejector operation, a temperature setting frame for setting temperatures for a cylinder, etc., a process monitoring frame for displaying actual measurement values of minimum cushion quantity, cycle time, etc. obtained for each shot, for a plurality of past shots, a multi waveform monitoring frame for displaying actual measurement values of pressure, speed, etc. in waveform, a production management frame for setting the number of products to be produced, etc.

A switchover to another main frame MD is carried out by touching a touch switch TS provided at the bottom of the main frame. A switchover to another main frame MD can also be carried out using the above-mentioned function keys K. Also, it can be arranged such that a switchover to another main frame MD can be carried out using a key dedicated to this purpose.

After the main frame MD as shown in FIG. 5 is displayed, the processor 11 monitors whether or not the touch switch TS is operated to select another main frame and whether or not the function keys K are operated to select another display mode (Steps S3 and S4). When another main frame MD is selected by operating the touch switch TS, the number or code of the selected main frame MD is stored in the first main-frame storage area (Step S6). Then, the procedure returns to Step S2 to display the selected main frame MS on the screen of the display device 13.

When another display mode is selected by operating the function keys K, the selected display mode is stored in the mode storage area (Step S5), and the procedure returns to Step S 1.

If the second display mode is stored in the mode storage area, the procedure transfers from Step S 1 to Step S7 to read a main frame MD and subsidiary frames SD1, SD2 stored in the first main-frame storage area and first and second sub-frame storage areas, respectively (Step S7) to display the main frame MD and subsidiary frames SD1, SD2 in the corresponding regions (Step S8).

FIG. 6 is an example of a display in the second display mode, where a main frame MD, two subsidiary frames SD1, SD2 and the above-mentioned supplementary frame ED are displayed.

Like the main frame MD, the subsidiary frame SD is intended to deal with molding conditions, and displays primarily the conditions, history, etc. of the injection molding machine. The subsidiary frame SD1 shown in FIG. 6 is a current value frame which shows the current position of a screw, the latest shot peak pressure, the number of shots up to now, etc. The subsidiary frame SD2 shown in the same drawing is a process graph frame which shows cycle time for the latest 100 shots, etc. in the form of a graph. The main frame MD is the same as that shown in FIG. 5, namely an injection/measuring frame for setting injection conditions and measuring conditions.

In addition to the above-mentioned types, the group of subsidiary frames SD includes an alarm frame for showing an alarm, etc. It may be arranged such that setting items different from those in the main frames can be set in the subsidiary frames. A switchover to another subsidiary frame is carried out by using the above-mentioned function keys K. It can be arranged such that a switchover to another subsidiary frame can be carried out using a touch switch dedicated to this purpose provided within the screen. In the second display mode, a switchover to another main frame MD is carried out in the same way as in the above-mentioned first display mode (see FIG. 5), namely it is carried out using the touch switch TS provided within the main frame MD. Each subsidiary frame SD is displayed in a region different from the region in which the main frame MD is displayed. In order to increase the amount of information displayed at a time, it is desirable that each subsidiary frame SD is displayed in a region not overlapping the region for the main frame MD. It can be, however, arranged such that each subsidiary frame is displayed in the form of a window, in a region different from but overlapping the region for the main frame MD.

After one main frame MD and two subsidiary frames SD1, SD2 are displayed as shown in FIG. 6 at Step S8, the processor 11 monitors whether or not the touch switch TS is operated to enter a main frame switchover command, whether or not a first sub-frame switchover function key K is operated to enter a first sub-frame switchover command, whether or not a second sub-frame switchover function key K is operated to enter a second sub-frame switchover command, and whether or not the function keys K are operated to enter a mode switchover command (Steps S9, S10, S11, S12). When a main frame switchover command is entered, the number or code of a main frame newly selected is stored in the main frame storage area (Step S14), and the procedure returns to Step S7. When a first sub-frame switchover command is entered, the number or code of a subsidiary frame newly selected is stored in the first sub-frame storage area (Step S15), and when a second sub-frame switchover command is entered, the number or code of a subsidiary frame newly selected is stored in the second sub-frame storage area (Step S16), and then the procedure returns to Step S7. The processor performs Step S7 and subsequent steps, thereby displaying the main frame and subsidiary frames selected. After this, each time a main frame or subsidiary frame is selected, the main frame or subsidiary frame selected is displayed. When a mode switchover command is entered, the display mode newly selected is stored in the mode storage area (Step S13) and the procedure returns to Step S1.

Although, in the present embodiment, two subsidiary frames are displayed in the second display mode, the number of subsidiary frames displayed may be one or more than two.

When the third display mode is selected, the procedure transfers from Step S1 to Step S17 to display a plurality of main frames MD. In the present embodiment, it is supposed that four main frames MD1 to MD4 are displayed. Hence, the first to fourth main-frame storage areas are read (Step S17) and first to fourth main frames MD1 to MD4 stored in the storage areas are displayed (Step S 18). Then, the processor monitors whether or not a main frame switchover command is entered by operating a touch switch TS in any of the first to fourth main frames MD1 to MD4, and whether or not a display mode switchover command is entered by operating the function keys K (Steps S 19 to S23).

FIG. 7 is an example of a display in the third display mode, where four main frames MD1 to MD4 and the above-mentioned supplementary frame ED are displayed.

In FIG. 7, the main frame MD1 is an above-mentioned injection/measuring frame, the main frame MD2 an above-mentioned temperature setting frame, the main frame MD3 an above-mentioned process monitoring frame, and the main frame MD4 an above-mentioned multi waveform monitoring frame. Although, in FIG. 7, aside from the always-displayed field, the screen is divided into four regions, the number of regions is not limited to four.

When a main frame switchover command is entered by operating a touch switch TS in the main frame MD 1 (Step S 19), the number or code of a main frame MD newly selected is stored in the first main-frame storage area (Step S25) and the procedure returns to Step S 17. Likewise, when a main frame switchover command is entered by operating a touch switch TS in the other main frames MD2 to MD4 (Step S20 to S22), the numbers or codes of main frames MD2 to MD4 newly selected are stored in the corresponding main-frame storage areas (Steps S26 to S28), and the procedure returns to Step S 17. The processor reads the first to fourth main-frame storage areas, and displays the stored frames, as first to fourth main frames MD1 to MD4 (Step S 18). After this, each time a frame switchover command is entered by operating a touch switch in any of the main frames, a main frame newly selected is displayed. When another display mode is selected by operating the function keys K (Step S23), the display mode selected is stored in the display mode storage area (Step S24) and the procedure returns to Step S1.

The above is the display control in the present embodiment.

In the present embodiment, the main frame MD in FIG. 5, the main frame MD in FIG. 6, and the main frame MD1 in FIG. 7 are all injection/measuring frames, which are displayed in the same layout and in different sizes. It can be, however, arranged such that the main frame of the same type is displayed with different display items and in a different layout depending on the size of the main-frame display region in each display mode. Further, the supplementary frame ED for displaying items which should be always displayed does not absolutely need to be provided independently of the main frame display region and the subsidiary frame display region.

As clear from the above, in the first display mode, since one main frame is displayed over the whole region of the screen of the display device, characters, numerical values and graphs are displayed in a large size so that they can be read clearly. In the third display mode, since a plurality of main frames (four main frames) are displayed at a time, the amount of information displayed at a time is large and it is possible to monitor relevant information included in various frames, at a time on the same screen. In the second display mode, while the size of characters and the like displayed is medium and the amount of information displayed is medium, one main frame and one or more subsidiary frames (in the above-described embodiment, two subsidiary frames) are displayed at a time. Thus, it is possible to monitor data, displaying a main frame and subsidiary frames associated with the main frame, together.

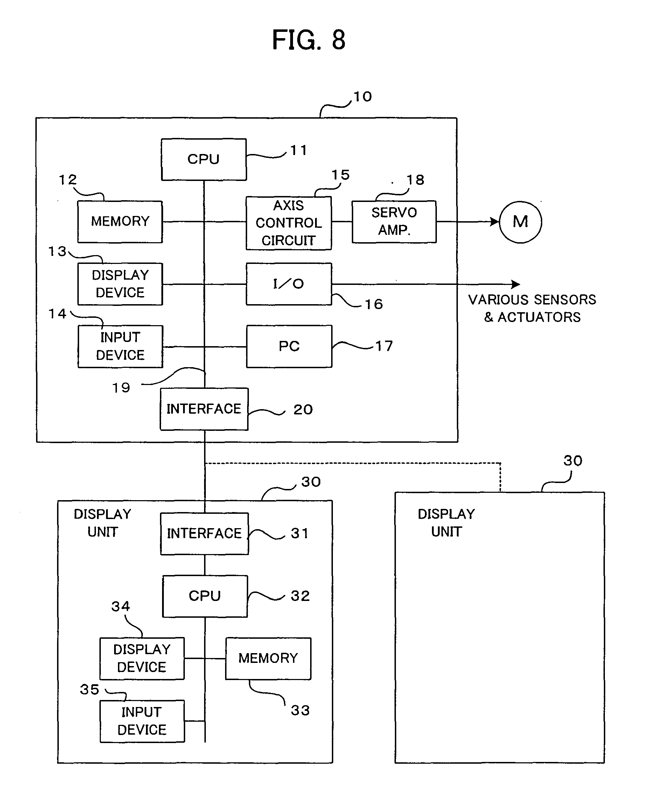

FIG. 8 is a schematic block diagram showing a second embodiment of the present invention. In the second embodiment, a control device 10 of an injection molding machine which constitutes a display controller has an interface 20 for an external display apparatus, and an external display unit 30 is connected to the control device 10 by means of this interface 20, where the selection of a display mode from among the first to third display modes, and the selection of a main frame or subsidiary frame to be displayed can be carried out also with the external display unit 30. The external display unit 30 connected by means of the interface 20 includes a connection interface 31, a processor 32, memory 33 including ROM, RAM, etc., a display device 34, and an input device 35 such as a keyboard, etc.

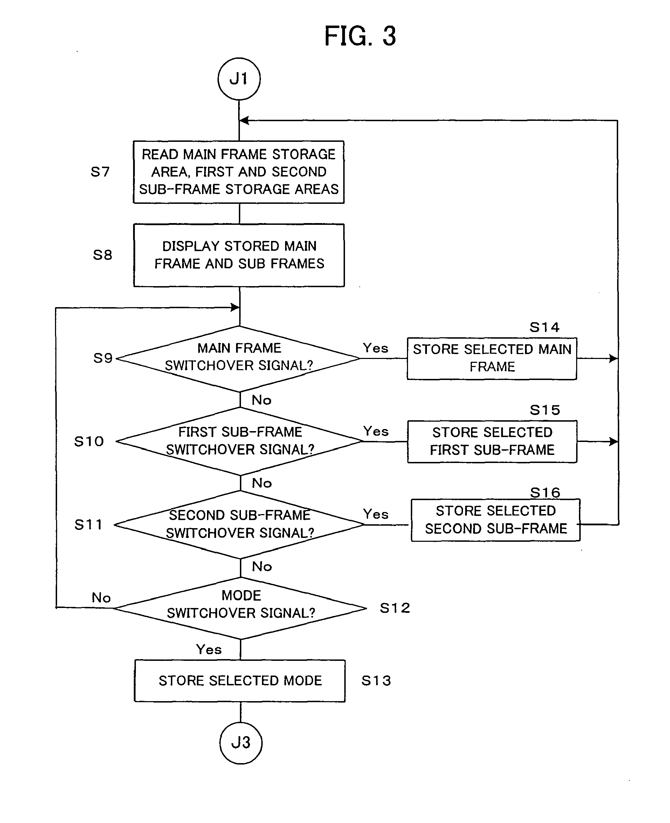

The processor 32 of the external display unit 30 performs the process shown in FIGS. 3 to 5, and at the time of displaying a selected frame (Steps S2, S8, S18), sends a request for to-be-displayed data, to the control device 10 of the injection molding machine through the interfaces 31, 20. The control device 10 of the injection molding machine sends the requested data necessary for displaying the selected frame, to the external display unit 30. The processor 32 of the external display unit 30 performs the process shown in FIGS. 3 to 5 using the data sent from the control device 10 of the injection molding machine and displays the selected frame in the selected display mode.

As indicated by a broken line in FIG. 8, it can be arranged such that a plurality of external display units 30 are connected so that the display devices 34 of the external display units 30 each display information in one of the display modes as shown in FIGS. 5 to 7.

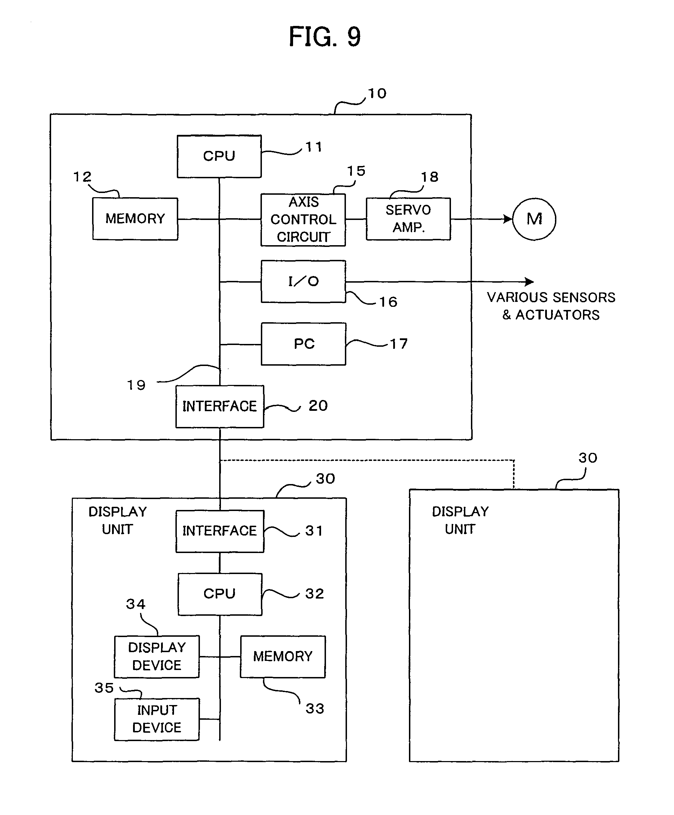

FIG. 9 is a schematic block diagram showing a third embodiment of the present invention. The third embodiment differs from the second embodiment shown in FIG. 8 in that the control device 10 of the injection molding machine includes neither a display device nor an input device. By connecting an external display unit 30 to the control device of the injection molding machine using an interface 20, a display controller for the injection molding machine is constituted. Also in this case, a plurality of external display units 30 can be connected. Since the function or operation of the third embodiment is similar to that of the second embodiment, the description thereof will be omitted.

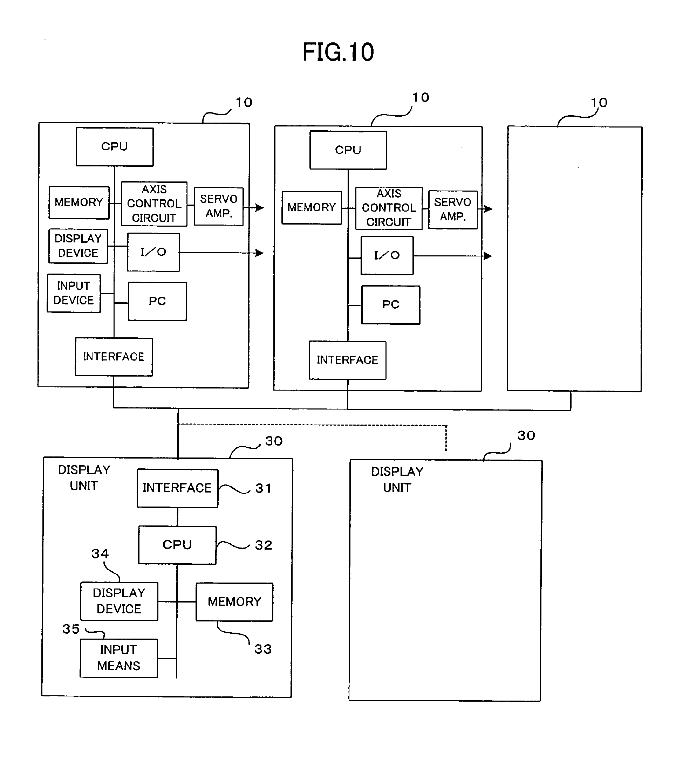

FIG. 10 is a schematic block diagram showing a fourth embodiment of the present invention.

In the fourth embodiment, by connecting one or more external display units 30 to control devices 10 of a plurality of injection molding machines by means of an interface, a display controller for the injection molding machines is constituted. In the fourth embodiment, the control device 10 of each injection molding machine may include a display device 13 and an input device 14 and function as a display apparatus in itself, or alternatively, include neither a display device nor an input device. The external display unit 30 connected by means of an interface 20 displays information in one of the display modes as shown in FIGS. 5 to 7.

When an injection molding machine is selected using an input device 35 of an external display unit 30, the processor 32 of the external display unit 30 sends a request for data to be displayed in a selected frame, to the selected injection molding machine through the interfaces 31, 20. The control device 10 of the injection molding machine sends the requested data necessary for displaying the selected frame, to the external display unit 30. The processor 32 of the external display unit 30 displays the selected frame including the data sent from the control device 10 of the injection molding machine. In each processing cycle, each time a new display mode, a new main frame or a new subsidiary frame is selected, a request for data to be displayed in the newly selected frame is sent to the selected injection molding machine, so that the selected frame including the data sent is displayed.

In the second to fourth embodiments, when, for one control device 10, a plurality of display devices capable of displaying data about the control device 10 are provided, it can be arranged such that at least one of the display devices can set setting items using an input device, while the other display devices can just display information.

## Claims

1. A display controller for an injection molding machine, for controlling a display on a display device, comprising:
displaying means for displaying one or more main frames regarding molding conditions of the injection molding machine and one or more subsidiary frames to be associated with the main frame on the display device, in one of a first display mode where only one main frame is displayed, a second display mode where only one main frame and at least one subsidiary frames are displayed, and a third display mode where two or more main frames are displayed; and
switchover means for performing a switchover among the first, second and third display modes in response to a manually inputted signal.

2. A display controller according to claim 1, further comprising means for switching over the main frame displayed on the display device to another main frame, and means for switching over the subsidiary frame displayed on the display device to another subsidiary frame.

3. A display controller according to claim 1, wherein two or more subsidiary frames are displayed on the display device in the second display mode.

4. A display controller according to claim 1, wherein a supplementary frame is always displayed in an area other than areas where the main frames and the subsidiary frames are displayed on the display device.

5. A display controller according to claim 1, wherein a controller of the injection molding machine serves as the display controller.

6. A display controller according to claim 5, wherein the display controller controls the display on a display device provided at the controller of the injection molding machine.

7. A display controller according to claim 1, wherein the display controller constitutes an external display unit with a display device and an interface, and the external display unit is connected to a controller of the injection molding machine through the interface and controls the display on the display device.

8. A display controller according to claim 1, wherein the display controller constitutes an external display unit with a display device and an interface, and the external display unit is connected to controllers of a plurality of injection molding machines through the interface, and controls the display for any of the plurality of injection molding machines on the display device.
